# EUROPEAN PATENT APPLICATION

(11) **EP 1 227 257 A2**
(43) Date of publication of application: **31.07.2002**
(21) Application number: 02000379.4
(22) Date of filing: 07.01.2002
(51) Int. Cl.: F16D 13/64

(54) **Driven plates for friction clutches**

(30) Priority: 18.01.2001 GB 0101268
(71) Applicant: Automotive Products UK Limited, Leamington Spa, Warwickshire CV31 3ZL (GB)
(72) Inventor: Young, Alastair John, CV8 1DW, Warwickshire (GB)
(74) Representative: Morrall, Roger

(57) **Abstract**

A driven plate (10) for a friction clutch has a hub assembly (11) for mounting on a drive shaft, and a pair of annular friction linings (15a,15b) concentric with and radially spaced from the hub assembly. The friction linings are carried by a support means (16) which is attached to the hub assembly by a number of torque straps (18a,18b) attached to the support means (16) along a circumference which lies radially outboard of the radially inner edge of the linings (15a,15b). The support means (16) further includes a spacing means in the form of spring segments (20) arranged such that when the friction linings are fully clamped in use there is an axial spacing between the linings which is larger than the axial thickness of the straps, the straps being arranged to extend in a radial plane located such that there is an axial clearance between the straps (18a,18b) and the inner surface (25,26) of each of the friction linings (15a,15b).

## Description

The present invention relates to driven plates for friction clutches. In particular, but not exclusively, the invention relates to driven plates for use in friction clutches in motor vehicles.

Known driven plates for motor vehicle friction clutches comprise a hub assembly for mounting on a drive shaft, which defines an axis of rotation for the driven plate. A pair of friction linings is disposed concentrically about the hub assembly and the linings are connected to the hub assembly such that torque can be transmitted from the friction linings to the hub assembly and vice versa.

Such driven plates are often used in friction clutches for motor vehicles to selectively transfer drive from a flywheel, which may be attached to the crankshaft of an internal combustion engine, to a drive shaft of the vehicle transmission. Such friction clutches typically comprise a clutch cover assembly attached to the flywheel with the driven plate located between the clutch cover assembly and the flywheel. The clutch cover assembly will normally have a pressure plate which is rotationally fast with the cover but which is capable of moving axially relative to the cover to a limited extent. When the clutch is engaged, the pressure plate is biased by a spring means axially towards the flywheel to clamp the friction linings of the driven plate between the pressure plate and the flywheel so that drive can be transmitted between the flywheel the transmission drive shaft.

In known driven plates, the hub assembly often comprises torsional damper means to isolate the drive line from torsional vibrations generated in the engine. In a typical arrangement, the hub assembly comprises a pair of guide plates arranged one on either side of a radially extending flange on the hub. The guide plates are inter-connected so that they rotate together and are capable of moving circumferentially to a limited extent relative to the hub flange. The relative movement between the guide plates and the hub flange is controlled by one or more resilient members such as coil springs. Typically the friction linings will be attached to one of the guide plates.

It is also known for the hub assembly to comprise, in addition to this main damper, an idle centre or pre-damper to isolate the drive line from low level torsional vibrations which occur when the engine is idling or running at relatively low speed. In a typical pre-damper arrangement, the hub flange is drivingly connected to the hub by means of inter-engaging drive formations having circumferential clearances to allow the flange to move circumferentially relative to the hub to a limited extent. The relative movement between the hub flange and the hub being controlled by one or more resilient members having a spring force which is less than that of the resilient members of the main torsion damper.

Alternatively driven plates may be of the rigid type in which no torsion damper is provided and friction linings are attached to a radial flange which is fixed rotationally fast with, or is integral with, the hub. Such rigid driven plates are often used in conjunction with twin mass flywheels which comprise a torsion damper to isolate the drive line from vibrations generated by the engine.

Due to manufacturing tolerances et cetera, it is not always possible to ensure that when a vehicle engine and drive line are assembled the axes of the crankshaft and transmission drive shaft are in angular alignment. Where there is some angular misalignment between these axes then there will be a tendency for the friction linings, which are clamped to the flywheel, to rotate about the axis of crankshaft or flywheel whilst the hub is constrained to rotate about the axis of the transmission drive shaft. Because the friction linings and the hub are rotating about separate non-angularly aligned axes, cyclical stresses are set up in the driven plate.

In addition, when the flywheel is attached to an internal combustion engine, the forces acting on the crankshaft of the engine may cause the flywheel to swash or swirl about the axis of the crankshaft. When the clutch is engaged the friction linings will tend to follow the movement of the flywheel and so will swash or swirl about the hub which is constrained to rotate about the axis of the transmission drive shaft. This again sets up cyclical stresses in the driven plate.

When cyclical stresses are set up in the driven plate, this can lead to fatigue failure in the material of the driven plate. This is a particular problem in driven plates of the rigid type in which the friction linings are mounted on relatively thin spring segments. In such cases most of the relative movement between the friction linings and the hub assembly are absorbed by the spring segments which are flexible compared to the rest of the driven plate. As a consequence the segments are subjected to cyclical stressing and in extreme cases the material in the segments may fail due to fatigue.

Problems can also arise in driven plates which have a pre-damper or idle centre. In this type of driven plate the above described relative movement between the friction linings and the hub due to axial misalignment may be taken up in the pre-damper so that the damper is no longer able to function correctly.

An object of the invention is to provide an improved driven plate which overcomes or at least mitigates the above described problems of the known driven plates.

In accordance with a first aspect of the invention there is provided a driven plate for a friction clutch, the driven plate comprising a hub assembly for mounting on a drive shaft, and a pair of annular friction linings concentric with and radially spaced from the hub assembly, the friction linings being carried by a support means attached to the hub assembly by a number of torque straps, characterised in that the straps are attached to the support means along a circumference which lies radially outboard of the radially inner edge of the linings and in that the support means further comprises spacing means arranged such that when the friction linings are fully clamped in use, there is an axial spacing between the linings which is larger than the axial thickness of the straps, the straps being arranged to extend in a radial plane located such that there is an axial clearance between the straps and the axially inner surface of each of the friction linings.

In accordance with a second aspect of the invention, there is provided a driven plate for a friction clutch, the driven plate comprising a hub assembly for mounting on a drive shaft, and a pair of annular friction linings concentric with and radially spaced from the hub assembly, the friction linings being mounted to a friction lining support assembly attached to the hub assembly by a number of torque straps characterised in that the friction lining support assembly comprises a substantially planar backing plate attached to the hub assembly by the torque straps and an annular spring segment means attached to a first axial face of the backing plate, one of the friction linings being attached to the spring segment means whilst the other friction lining is attached to a second axial face of the backing plate, the spring segment means comprising a number of grooves or slots, each groove or slot being arranged to provide axial clearance for a corresponding one of the torque straps.

In accordance with a third aspect of the invention, there is provided a driven plate for a friction clutch, the driven plate comprising a hub assembly for mounting on a drive shaft, and a pair of annular friction linings concentric with and radially spaced from the hub assembly, the friction linings being carried by a number of spring segments arranged circumferentially about the hub assembly characterised in that the spring segments are arranged in circumferentially overlapping relation, each segment being attached to the hub assembly by at least one torque strap and having at least one groove or slot arranged to provide axial clearance for a torque strap of an overlapped segment.

In a driven plate in accordance with the invention, the friction linings are able to tilt relative to the hub to a limited extent without the straps contacting the linings. As a result the linings are able to rotate about an axis which is not aligned with the axis of rotation of the hub assembly and/or the linings can follow the swashing movement of a flywheel without setting up stresses in the hub assembly. This reduces the risk of fatigue failure and permits proper operation of the torsion damper or pre-damper where provided.

Other features of the present invention are defined in the accompanying sub-claims

Several embodiments of the invention will now be described, by way of example only, with reference to the accompanying drawings in which:
Figure 1 is plan view of a driven plate in accordance with the invention as seen from the pressure plate or gearbox side;
Figure 2 is a cross sectional view of part of the driven plate of Figure 1 taken along the line X-X of Figure 1;
Figure 3 is perspective view of the driven plate of Figure 1 taken in the direction of arrow A of Figure 2;
Figure 4 is a perspective view of the driven plate of Figure 1 taken from the direction of arrow B of Figure 2 with one of the friction linings removed for clarity;
Figure 5 is a plan view of a backing plate of the driven plate of Figure 1 taken in the direction of arrow B of Figure 2;
Figure 6 is a perspective view of a spring segment of the driven plate of Figure 1;
Figure 7 is an enlarged cross sectional view of part of the driven plate of Figure 1 taken along the line Y-Y of Figure 1, showing the friction linings in the clamped condition;
Figure 8 is an enlarged developed cross sectional view of the driven plate of Figure 1 taken along the line Z-Z of Figure 1 showing the friction linings relaxed condition;
Figure 9 is a plan view of a further embodiment of a driven plate in accordance with the invention, as seen from the flywheel side with the friction linings removed for clarity;
Figure 10 is an enlarged cross sectional view of part of the driven plate of Figure 9 taken along the line X-X of Figure 9;
Figure 11 is an enlarged developed cross sectional view of the driven plate of Figure 9 taken along the line Y-Y of Figure 9;
Figure 12 is a plan view of a spring segment of the driven plate of Figure 9; and
Figure 13 is a view similar to that of Figure 11 showing a modified driven plate in accordance with the invention having two sets of back to back spring segments.

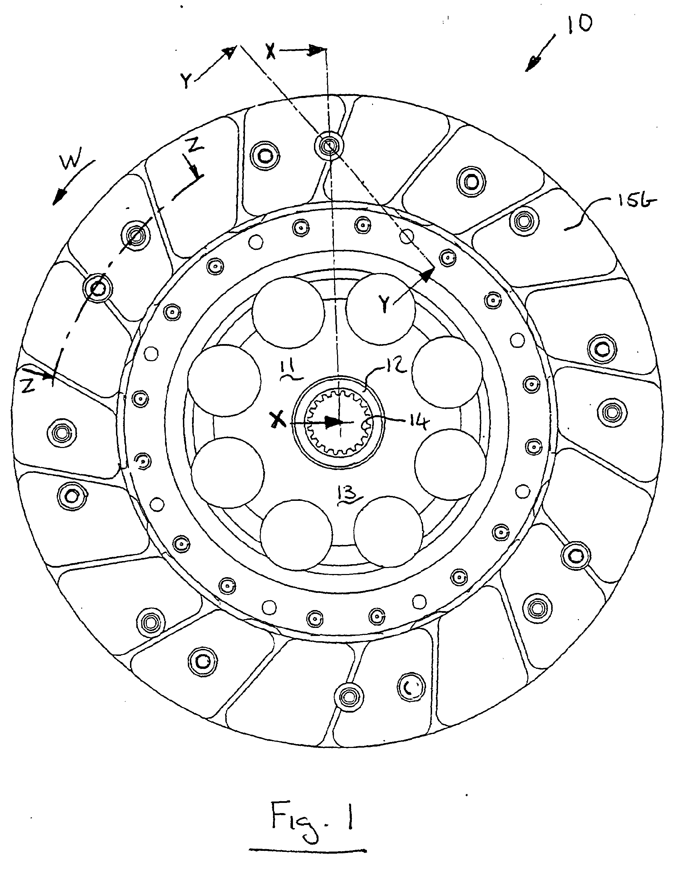

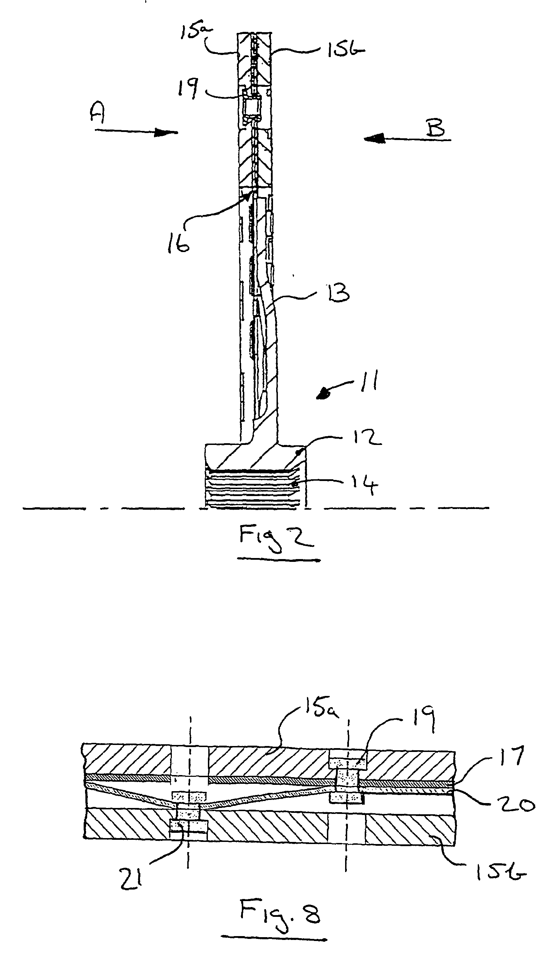

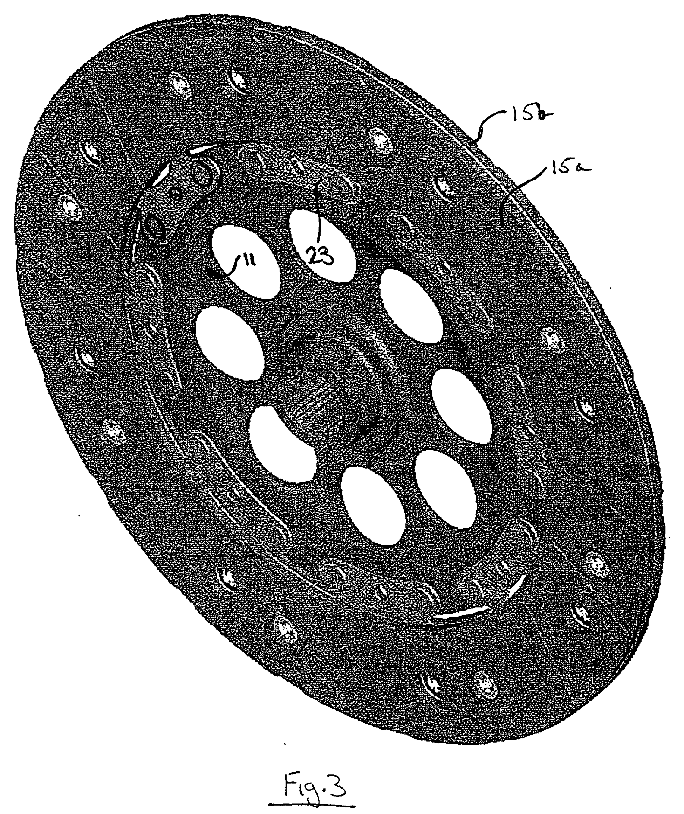

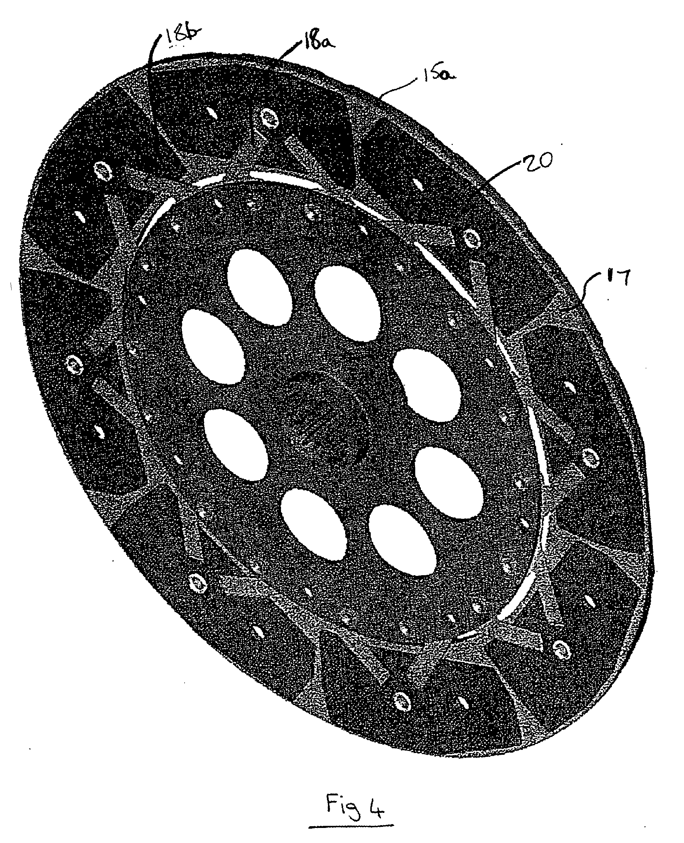

Figures 1 to 8 show a driven plate 10 for a friction clutch in a motor vehicle. The driven plate 10 comprises a hub assembly 11 having a central hub 12 and a radially extending flange 13. The central hub 12 has internal splines 14 for mounting on a drive shaft (not shown) of an associated vehicle transmission.

The driven plate 10 further comprises a pair of annular friction facings 15a, 15b which are arranged concentrically about the flange 13. The friction facings 15a, 15b are carried by a support means indicated generally at 16.

The support means 16 comprises a planar backing plate 17 connected to the radial flange 13 by a number of torque straps 1 8a, 18b disposed circumferentailly about the backing plate 17. A first friction lining 15a is secured to one axial face of the backing plate 17 by rivets 19, whilst a number of circumferentially spaced spring segments 20 are secured to other axial face of the backing plate 17 also by the rivets 19.

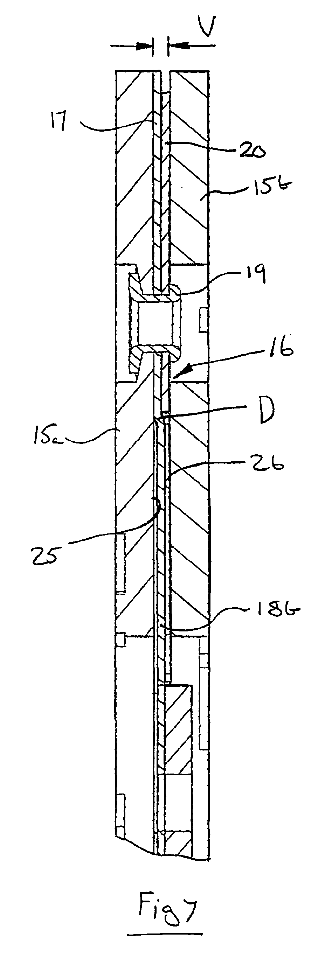

As is best seen from Figure 8, the spring segments 20 are crimped in an axial direction of the clutch in a manner known in the art. A second friction lining 15b is attached to the spring segments by means of rivets 21 at a point where the spring segment is spaced axially from the backing plate 17. The spring segments 20 are made of a resilient material, such as spring steel, so that the arrangement tends to bias the friction facings 15a, 15b apart to provide cushioning for clutch engagement in a manner known in the art.

In an alternative embodiment, not shown, rather than having a number of separate spring segments 20 circumferentially spaced about the backing plate 17, a single annular spring segment could be used.

The radially outer ends the torque straps 18a, 18b are attached to the backing plate along a circumference which is close to the radial centre line of the friction linings 15a, 15b, with each strap being attached adjacent to a rivet 19 which attaches one the friction linings 15a to the backing plate 17. In the embodiment disclosed, the straps 18a, 18b are formed integrally with the backing plate 17 by means of a pressing process but this is not essential and the straps could be separate members attached to the backing plate 17 by any suitable means such as riveting or welding etc.

The radially inner ends of the torque straps 18a, 18b are attached to the radial flange 13 of the hub assembly 11 by further rivets 22. In the embodiment disclosed the torque straps 18a, 18b are attached to the flange 13 in pairs with the inner end of each strap being connected to the inner end of an adjacent strap by a circumferential tab 23 which is riveted to the flange 13.

However this need not be the case and each torque strap could be individually attached to the radial flange 13.

The torque straps 18a, 18b are comparatively stiff in the circumferential direction so as to be capable of transmitting rotary drive between the friction facings 15a, 15b and the hub assembly 11. The torque straps are arranged in two sets alternately about the backing plate with the straps 18a of one set being inclined at first angle to a radius of the driven plate whilst the torque straps 18b of the other set are inclined at a second angle substantially opposite to the first angle.

The arrangement of the torque straps 18a, 18b ensures that torque can be adequately transmitted between the friction linings 15a, 15b and the hub assembly 11 in both the drive and overrun conditions. In this context, the term "drive" is used to describe the situation in which torque is being transmitted from the flywheel of an associated engine to a drive shaft of an associated transmission, whilst the term "overrun" describes the opposite situation in which torque is being transmitted from the drive shaft to the flywheel. If it is assumed that the direction of rotation of the driven plate 10 in normal use is indicated by the arrow W in Figure 1, then the straps 18a acting in tension transmit most of the torque from the friction linings 15a, 15b to the hub assembly 11 when the driven plate is being used under drive conditions. However, when the driven plate used under overrun conditions, then the straps 18b acting in tension will transmit most of the torque from the hub 11 to the friction linings 15a, 15b.

Whilst the torque straps 18a, 18b are comparatively rigid in the circumferential direction, they are resilient in the axial direction of the driven plate to allow the friction linings 15a, 15b to tilt relative to the hub assembly 11. To this end the torque straps 18a, 18b can be made from any suitable resilient material such as spring steel.

Because the torque straps 18a, 18b are attached to the backing plate 17 along a circumference which lies close to the radial centre line of the friction linings 15a, 15b, they are longer than would be the case if they were attached to the radially inner edge of the backing plate. This is advantageous because the axial flexibility of the straps increases in proportion to their length. It should be noted in this regard that it is preferable for the torque straps 18a, 18b to be attached to the hub assembly 11 at as large a diameter as possible in order to minimise the stresses developed in the straps when transmitting driving torque between the hub assembly and the linings. Furthermore, in alternative embodiments in which the hub assembly incorporates a torsion damper, the minimum outside diameter of the hub assembly 11 will be determined by the need to accommodate the torsion damper. Hence it is not always desirable or possible to reduce the outer diameter of the hub assembly in order to increase the length of the straps.

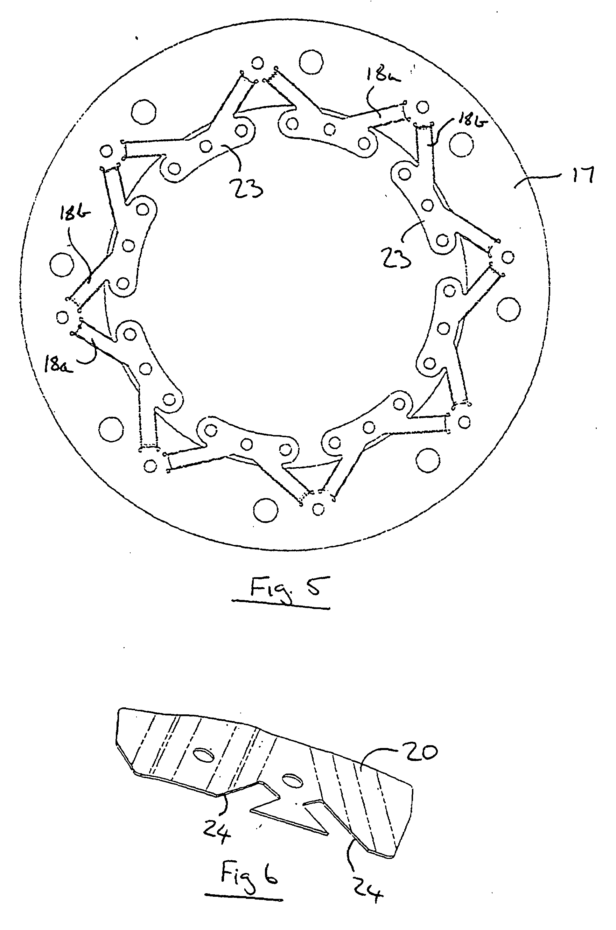

The spring segments 20 in addition to providing axial cushioning for the friction linings act as a spacing means such that when the friction linings are fully clamped, the axial gap 'V' between the linings 15a, 15b is greater than the axial thickness of the torque straps 18a, 18b (see Figure 7). Furthermore, each of the spring segments has two grooves or slots 24 formed therein. Each of the grooves or slots 24 is arranged so as to receive a respective one of the torque straps 18a, 18b on the backing plate 17 to provide an axial clearance for the straps.

As can be seen from Figure 7, the straps 18a, 18b are cranked at a point D close to the point at which they are attached to the backing plate 17. This results in the straps extending in a radial plane located such that there is an axial gap between the straps and each of the inner axial surfaces 25, 26 of the friction linings 15a, 15. It will be noted that with the friction linings fully clamped, each strap 18a, 18b is at least partially contained within its respective groove or slot 24.

The axial clearances between the straps 18a, 18b and the inner surfaces 25, 26 of the friction linings enable straps to flex axially to a limited extent without contacting the friction linings 15a, 15b. In practice the axial thickness and position of the straps and the axial thickness of the spring segments are selected such that the clearances between the straps and the friction linings 15a, 15b allow the linings to tilt sufficiently with respect to the hub assembly 11 to accommodate a predetermined range of angular misalignment between an associated engine and gearbox with which the driven plate is to be used.

Thus it can be seen that in the driven plate 10, the combination of torque straps connected to the support means along a circumference which lies radially outboard of the radial inner edge of the friction linings and the spacing means to ensure adequate axial clearance between the straps and the linings provides a simple and robust construction which permits the linings to tilt axially relative to the hub assembly so as to compensate for axial misalignment or swash of a flywheel.

In an alternative embodiment (not shown), the torque straps 18a, 18b are provided on the spring segments 20, and the grooves or slots 24 are provided in the planar backing plate 17. If this arrangement is adopted, it is preferred that a single annular spring segment be used rather than a plurality of separate spring segments circumferentially spaced about the backing plate.

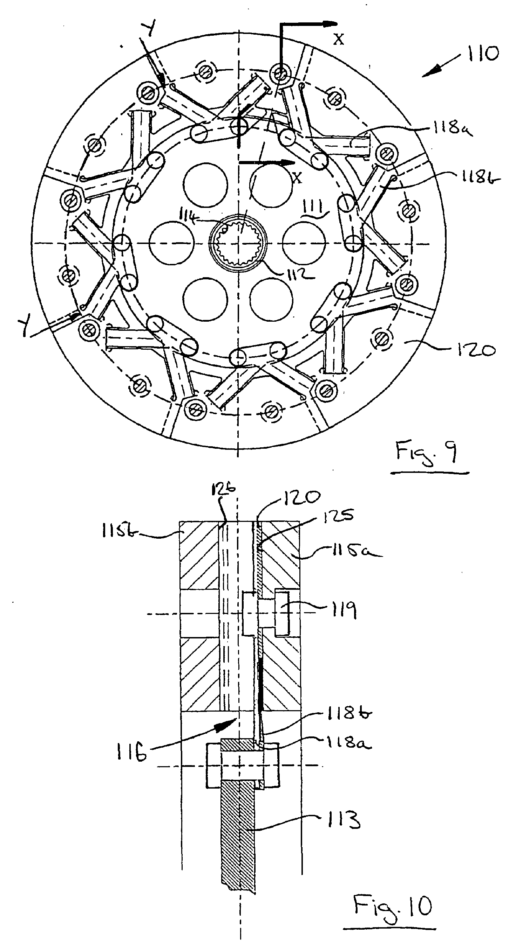

Figures 9 to 12 show a further embodiment of a driven plate 100 in accordance with the invention. The same reference numerals, but increased by 100, are used to identify components which perform a similar function to those described with reference to the driven plate 10.

The driven plate 110 comprises a hub assembly 111 having a central hub 112 and a radially extending flange 113. The central hub 112 has internal splines 114 for mounting on a drive shaft (not shown) of an associated vehicle transmission.

The driven plate 110 further comprises a pair of annular friction facings 115a, 115b which are arranged concentrically about the flange 113. The friction facings 115a, 115b are carried by a support means indicated generally at 116.

The support means 116 comprises a number of spring segments 120 circumferentially disposed in overlapping relation about the hub assembly 111 and which are attached the radial flange 113 of the hub assembly 111 by torque straps 118a, 118b.

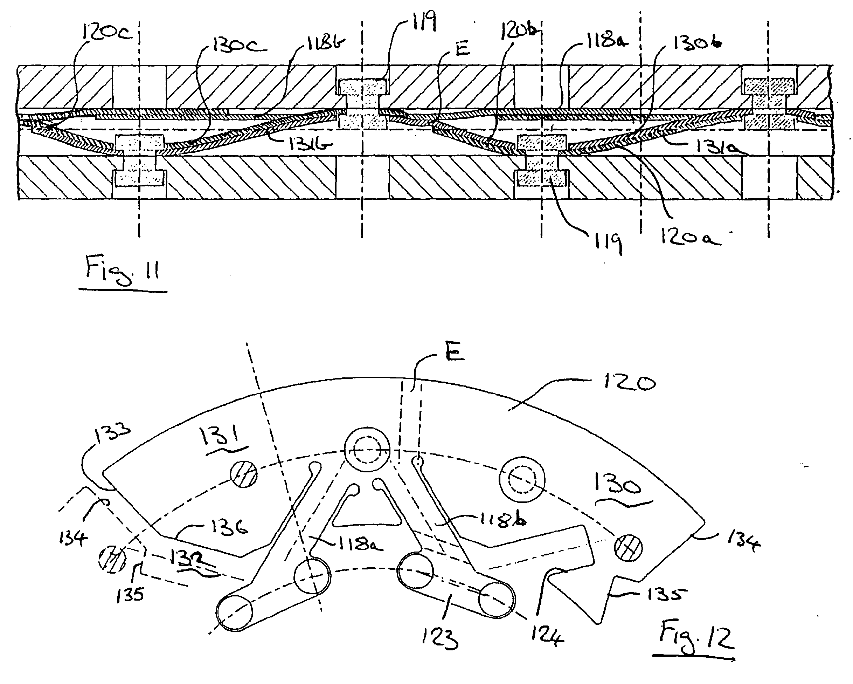

As can best be seen from Figures 11 and 12, each segment 120 is approximately twice the length of the segments 16 used in driven plate 10. The segments 120 can be considered as comprising two parts, an overlap portion 130 and a strap portion 131. Between the overlap portion130 and the strap portion 131, the segments are cranked at E for reasons which will be explained later. In addition to being cranked, the segments are crimped in the axial direction to form a generally sinusoidal shape in the radial plane - see Figure 11. The friction linings 115a, 115b are attached to the spring segments by rivets 119 such that the spring segments tend to bias the linings 115a, 115b apart to provide cushioning for clutch engagement in a manner known in the art.

Each segment 120 is connected to the radial flange 113 of the hub assembly by two torque straps 118a, 118b. The straps are attached to the strap portion 131 of the segment at a point close to a rivet 119 which attaches one of the friction linings 115a to the segment and which lies along a circumference close to the radial centre line of the friction linings. The straps 118a, 118b act to transmit torque between the linings 115a, 115b and the hub assembly 111 in a manner similar to that described above in relation to the torque straps 18a, 18b of driven plate 10.

In addition to carrying the friction linings, the overlapping relationship of the segments provides a spacing means to ensure that when the friction linings are fully clamped, the axial gap between the linings is greater than the axial thickness of the torque straps 118a, 118b.

Figure 11 shows how the segments 120 are arranged to overlap. Thus the strap portion 131a of a first segment 120a is overlapped by the overlap portion 130b of a circumferentially adjacent segment 120b. The strap portion 131b of the segment 120b being in turn overlapped by the overlap portion 130c of the next adjacent segment 120c. As can be seen, the crank E between the overlap portion 130 and the strap portion 131 of the segments 120 enables each segment to be overlapped on either side whilst ensuring that the maximum axial thickness of the overlapping segments is never greater than the thickness of two segments. It will be noticed that sinusoidal curves of the overlapping segments are "in phase" with each other, that is to say that overlapping segments are nested one within the other.

In order to provide axial clearance for the torque straps 118a, 118b, the overlap portion 130 of each segment 120 is provided with a groove or slot 124 which is arranged to receive one of the straps 118a of the segment which it overlaps. The other strap 118b is received in a groove or slot 132 provided between the circumferential end 133 of one segment and the opposite circumferential end 134 of the next adjacent segment as indicated by the dashed lines in Figure 12. The ends 133, 134 of the segments are suitably shaped in order to form a groove or slot 132 when the segments are assembled to the hub, thus one end 134 of the segments has a rectilinear cut-out 135 whilst the opposite end 133 has an angled edge 136 which cuts off the radially inner comer.

The torque straps 118a, 118b are cranked in the axial direction of the driven plate as required so that they extend generally in a radial plane which lies mid way between the inner surfaces 125, 126 of the linings 115a, 115b. This arrangement ensures that there is an axial clearance between the straps and the inner surfaces 125, 126 of the linings even when the linings are fully clamped.

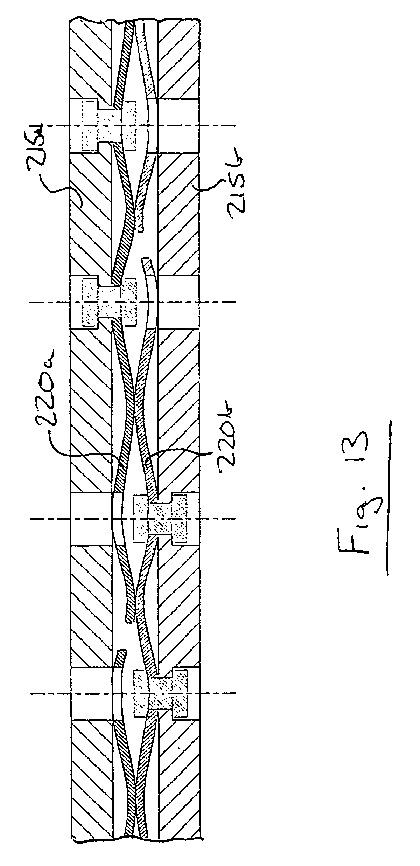

Figure 13 shows a modification to the driven plate shown in Figures 9 to 12. According to the modification, rather than having a series of overlapping segments, two sets of segments 220a, 220b are used back to back around the hub assembly. A first of the linings 215a is attached to one of the sets of segments 220a, whilst the other lining 215b is attached to the other 220b.

As can be seen from Figure 13, the segments 220 are crimped axially so as to have a generally sinusoidal form in the radial plane in a manner similar to the segments 120 in driven plate 110. However, in this arrangement the two sets of overlapping segments are offset circumferentially such that the sinusoidal curves of overlapping segments are out of phase with each other. This means that the segments do not nest one within the other but rather are aligned back to back. The segments are arranged to bias the linings apart axially to provide for axial cushioning of the driven plate.

The segments of both sets are attached to a flange of the hub assembly by means of torque straps. Grooves or slots are provided in or between the segments of each set to provide an axial clearance for the torque straps of the segments of the other set. In this arrangement each set of segments acts as a spacing means for the other set.

Whilst all the embodiments described above comprise hub assemblies of the rigid type, it should be understood that the invention is equally applicable to driven plates in which the hub assembly has a torsion damper and/or a pre-damper.

## Claims

1. A driven plate (10) for a friction clutch, the driven plate comprising a hub assembly (11) for mounting on a drive shaft, and a pair of annular friction linings (15a, 15b) concentric with and radially spaced from the hub assembly, the friction linings being carried by a support means (16) attached to the hub assembly by a number of torque straps (18a,18b), **characterised in that** the straps (18a,18b) are attached to the support means (16) along a circumference which lies radially outboard of the radially inner edge of the linings (15a,15b) and **in that** the support means (16) further comprises spacing means (20) arranged such that when the friction linings are fully clamped in use there is an axial spacing between the linings which is larger than the axial thickness of the straps, the straps being arranged to extend in a radial plane located such that there is an axial clearance between the straps (18a,18b) and the inner surface (25,26) of each of the friction linings (15a,15b).

2. A driven plate in accordance with claim 1 in which the support means (16) comprises a substantially planar backing plate (17), the support means further comprising a spring segment means (20) attached to a first axial surface of the backing plate, one of the friction linings (15b) being attached to the spring segment means (20), the other lining (15a) being attached to a second axial surface of the backing plate (17).

3. A driven plate in accordance with claim 2 in which the spring segment means comprises a plurality of circumferentially spaced spring segments (20).

4. A driven plate in accordance with claim 2 in which the spring segment means comprises a single annular spring segment.

5. A driven plate in accordance with any one of claims 2 to 4 in which the backing plate (17) is attached to the hub assembly (11) by the torque straps (18a,18b) and the spring segment means (20) comprises the spacing means.

6. A driven plate in accordance with claim 5 in which the or each spring segment (20) has a number grooves or slots (24), each groove or slot being arranged to provide axial clearance for a corresponding one of the torque straps (18a,18b).

7. A driven plate in accordance with claim 6 when dependent on claim 3 in which each spring segment (20) has two grooves or slots (24) arranged to provide axial clearance for corresponding ones of the torque straps(18a,18b).

8. A driven plate in accordance with any one of claims 1 to 4 in which the or each spring segment is attached to the hub by the torque straps and the backing plate comprises the spacing means.

9. A driven plate in accordance with claim 8 in which the backing plate has a number of grooves or slots, each groove or slot being arranged to provide axial clearance for a corresponding one of the torque straps.

10. A driven plate in accordance with claim 1 in which the support means comprises a plurality of spring segments (120) disposed circumferentially around the hub assembly (111), in which each segment (130) circumferentially overlaps a portion (131) of at least one other of the segments and is attached to the hub assembly by at least one torque strap (118a,118b)..

11. A driven plate in accordance with claim 10 in which each segment (120) has a groove or slot (124) arranged to provide axial clearance for a torque strap (118a) of an overlapped segment.

12. A driven plate in accordance with claim 11 in which grooves or slots (132) are formed between adjacent circumferential ends (133,134) of the segments, each such groove or slot being adapted to provide axial clearance for a corresponding one of the torque straps (118b).

13. A driven plate in accordance with any one of claims 5 to 12 in which the torque straps (18a,18b:118a,118b) are at least partially received in their corresponding grooves or slots (24:124,132) when the friction linings (25a,25b:125a,125b) are fully clamped in use.

14. A driven plate in accordance with any one of claims 11 to 13 in which the segments (120a,120b) are of generally sinusoidal form and are arranged such that the overlapping portions of adjacent segments are in phase with each other.

15. A driven plate in accordance with any one of claims 11 to 13 in which there are two sets of segments (220a,220b) arranged back to back about the hub, with one set being offset circumferentially relative to the other set.

16. A driven plate in accordance with any one of the previous claims, in which the torque straps (18a,18b:118a,118b) are arranged such that circumferentially alternate straps extend at generally opposite angles relative to a radius of the driven plate.

17. A driven plate in accordance with any one of the previous claims in which the torque straps are arranged in two sets (18a,18b:118a,118b) alternately about the hub assembly such that one set (18a:118a) is arranged to transmit the majority of the torque from the linings (15a,15b:115a,115b) to the hub assembly (11:111) when the driven plate is used under drive conditions, whilst the other set (18a:118b) is arranged to transmit substantially all the drive from the hub assembly to the friction linings when the driven plate is used in the overrun condition.

18. A driven plate (10) for a friction clutch, the driven plate comprising a hub assembly (11) for mounting on a drive shaft, and a pair of annular friction linings (15a,15b) concentric with and radially spaced from the hub assembly, the friction linings being mounted to a friction lining support assembly (16) which is attached to the hub assembly by a number of torque straps (18a,18b) **characterised in that** the friction lining support assembly (16) comprises a substantially planar backing plate (17) attached to the hub assembly (11) by the torque straps and an annular spring segment means (20) attached to a first axial face of the backing plate, one of the friction linings (15b) being attached to the spring segment means (20) whilst the other friction lining (15a) is attached to a second axial face of the backing plate (17), the spring segment means comprising a number of grooves or slots (24), each groove or slot being arranged to provide axial clearance for a corresponding one of the torque straps (18a,18b).

19. A driven plate in accordance with claim 18 in which the spring segment means comprises a plurality of circumferentially spaced spring segments (20) each segment having two grooves or slots (24) arranged to provide axial clearance for corresponding ones of the torque straps (18a,18b).

20. A driven plate in accordance with claim 18 in which the spring segment means comprises a single annular spring segment.

21. A driven plate (110) for a friction clutch, the driven plate comprising a hub assembly (111) for mounting on a drive shaft, and a pair of annular friction linings (115a,115b) concentric with and radially spaced from the hub assembly, the friction linings being carried by a number of spring segments (120a,120b) arranged circumferentially about the hub assembly **characterised in that** the spring segments (120a,120b) are arranged in circumferentially overlapping relation, each segment being attached to the hub assembly by at least one torque strap (118a,118b) and having at least one groove or slot (124) arranged to provide axial clearance for a torque strap (118a) of an overlapped segment.

22. A driven plate in accordance with any one of the previous claims in which the hub assembly (11:111) includes a torsional damper and/or pre-damper.
